# EUROPEAN PATENT SPECIFICATION

(11) **EP 0 661 767 B1**
(45) Date of publication and mention of the grant of the patent: **01.04.1998**
(21) Application number: 94203403.4
(22) Date of filing: 23.11.1994
(51) Int. Cl.: H01M 4/88, H01M 4/86

(54) **A method for the manufacture of cathodes for fuel cells**
Herstellungsverfahren von Brennstoffzellenkathoden
Méthode pour la fabrication de cathodes pour piles à combustible

(30) Priority: 04.01.1994 IT MI940004
(43) Date of publication of application: 05.07.1995
(73) Proprietor: FINMECCANICA S.p.A. AZIENDA ANSALDO, I-16128 Genova (IT)
(72) Inventor: Antolini, Ermete, I-16016 Cogoleto (Genova) (IT)
(74) Representative: Falcetti, Carlo

(56) References cited:
- EP-A- 0 473 236
- EP-A- 0 473 882
- CHEMICAL ABSTRACTS, vol. 103, no. 24, 16 December 1985 Columbus, Ohio, US; abstract no. 198585f, HIDE KOSHINA 'MOLTEN-CARBONATE FUEL CELL' & JP-A-60 117 566 (MATSUSHITA ELECTRIC INDUSTRIAL) 25 June 1985
- CHEMICAL ABSTRACTS, vol. 118, no. 24, 14 June 1993 Columbus, Ohio, US; abstract no. 243329, BERGMAN BILL ET AL 'Synthesis and performance of lithium cobalt oxide cathodes for MCFC' & PROC. - ELECTROCHEM. SOC., vol. 93, no.3, 1993 pages 342-55,

## Description

The present invention relates to a method for the manufacture of cathodes for fuel cells.

More particularly, it concerns a method for the manufacture for lithium cobaltite based cathodes for molten carbonate fuel cells, generally known in the art by the initials MCFC.

The cathodes most commonly used are based on an oxide of nickel lithiate. These are generally obtained by the oxidation and lithiation of a porous nickel plate.

This type of cathode however has limits of usefulness since it has a working life estimated at 25,000 hours at atmospheric pressure and 3,500 hours at a pressure of 700 kPa.

This lifespan is determined by the progressive dissolution of the nickel oxide, which constitutes the cathode, in the molten carbonate in which it is immersed. It may also be noted that the solubility of the nickel oxide depends almost linearly on the operating pressure of the molten carbonate fuel cell.

In order to overcome this disadvantage, it has been proposed to use lithium cobaltite instead of the oxide of nickel lithiate.

Cathodes based on this compound provide almost the same performance in use but have a considerably longer working life which is less dependent on the operating pressure of the molten carbonate fuel cell. This working life is estimated at 150,000 hours at atmospheric pressure and 90,000 hours at 700 kPa.

Given the convenience of this type of cathode, there is a need to devise a suitable method for the manufacture of such cathodes.

In European patent application EP-A-0473236 (Sitters et al) a method is described which consists of the preparation of a compact mixture, conventionally termed green, containing straight lithium cobaltite.

This green is spread over a flat surface by tape casting technique and then is cut and sintered to obtain cathodes of the required dimensions and characteristics.

The process necessary for the production of the lithium cobaltite for use directly in the green is, however, very complicated. Moreover this process uses cobalt salts, which are very expensive, as the starting material.

The technical problem at the basis of the present invention is the provision of a method for the manufacture of cathodes for molten carbonate fuel cells, including lithium cobaltite, which overcomes the disadvantages mentioned with reference to the prior art.

This problem is solved by a method of the type specified, according to the characterising portion of attached claim 1.

The main advantage of the method of the invention is that the preparation of the starting compounds is simple and economic. More particularly the powdered cobalt is cheaper than cobalt salts.

To advantage, the said mixture may contain binding agents, anti-foaming agents, solvents.

Various types of binding agents are known which are usually used with specific solvents.

For example, if the solvent is deionised water, the binding agents most commonly used are methylcellulose, polyacrylic polymers and PVA. If the solvent is non-aqueous, for example, ethanol, methanol, trichloroethylene, the binding agents most commonly used are polyvinylbutyrate, polyethylene, ethylcellulose and acrylic resins.

In a preferred version of the method of the invention, the binding agent is methylcellulose and the solvent used is deionised water.

The anti-foaming agents are known products which comprise dispersions of silica particles in silicones. To advantage, in the method of the invention, a mixture of silica and polydimethylsiloxane, commonly called simeticone, is used.

Moreover, the method gives more effective results if the dimensions of the granules constituting the powdered cobalt are within the range 0.001 mm to 0.005 mm.

Furthermore, in a preferred embodiment of the method of the invention, the compounds mentioned above are present in the mixture in the following fractions by weight:

| | |
|---|---|
| cobalt powder | 100 parts |
| lithium carbonate | 70-100 parts |
| binding agent | 20-40 parts |
| anti-foaming agent | 2-8 parts |
| solvent | 400-1000 parts |

The mixture resulting from the application of the above step of the invention will then, in a subsequent step, be heated to cause the formation of lithium cobaltite as well as the partial sintering of the mixture.

The cathode thus obtained has the characteristics of porosity and mechanical strength required for its use in molten carbonate fuel cells.

Instead of the heat treatment, the mixture may also be assembled directly in the fuel cell in the form of the cathode.

The temperature subsequently reached in the fuel cell causes the formation of lithium cobaltite in the quantities required for the correct operation of the cell.

One embodiment of the method of the invention will now be described by way of non-limitative example.

### EXAMPLE

A mill constituted by a rotary drum containing alumina balls is filled with:

| | |
|---|---|
| 100 g | cobalt powder |
| 72 g | lithium carbonate |
| 14 g | methyl cellulose (binding agent) |
| 4 g | simeticone (anti-foaming agent) |
| 500 g | deionised water (solvent) |

The said components are ground by the balls and the ground product is then mixed for 24 hours in suitable apparatus.

The resulting mixture is then de-gassed under vacuum in order to remove air trapped in it during the mixing.

The mixture is then spread over a flat substrate constituted by a glass sheet treated with beeswax to facilitate its subsequent peeling. This spreading is carried out by the technique of tape casting at a pouring rate of 5 cm/min. The doctoring blade thickness is within the range 1 mm to 5 mm.

Afterwards the mixture is dried, cut into shapes and dimensions suitable for the cathode which it is wished to make and subjected to a heat treatment which is carried out at a temperature within the range 850 °C to 1050 °C.

The heating is carried out with the temperature increased progressively at a rate of 2 °C/min while cooling is carried out with the temperature reduced progressively at a rate of 3 °C/min.

During the heat treatment described above, lithium cobaltite is formed, as has been shown by X-ray diffraction analysis. Photographs taken with an electron microscope have also confirmed partial sintering.

Mercury porosity measurements were then carried out providing the following data relating to the cathode manufactured by the method of the invention:

| | |
|---|---|
| total porosity | 70% |
| average pore dimensions | 0.008 mm |

These values are compatible with those required for the cathode to operate well in a molten carbonate fuel cell.

## Claims

1. A method for the manufacture of lithium cobaltite based cathodes for molten carbonate fuel cells, including characterised by the steps of:
* tape casting a mixture containing powdered cobalt and lithium carbonate;
* cutting said mixture into shapes and dimensions suitable for cathodes; and
* heating said mixture to cause the formation of said lithium cobaltite based cathodes.

2. A method according to claim 1, wherein the mixture contains at least one binding agent.

3. A method according to claim 1, wherein the mixture contains at least one anti-foaming agent.

4. A method according to claim 1, wherein mixture contains at least one solvent.

5. A method according to claim 1, wherein the powdered cobalt in the mixture is constituted by granules having dimensions within the range 0.001 mm to 0.005 mm.

6. A method according to claims 1 to 5, wherein the mixture contains, in fractions by weight:
| | |
|---|---|
| cobalt powder | 100 parts |
| lithium carbonate | 70-100 parts |
| binding agent | 20-40 parts |
| anti-foaming agent | 2-8 parts |
| solvent | 400-1000 parts |

7. A method according to claim 6, characterised in that the at least one binding agent is methylcellulose.

8. A method according to claim 6, characterised in that the at least one anti-foaming agent is simeticone.

9. A method according to claim 6, characterised in that the at least one solvent is deionised water.

10. A method according to claim 1, wherein the mixture is heated to a temperature of from 850 °C to 1050 °C.

11. A method according to claim 1, wherein the mixture is heated by assembling it directly in a molten carbonate fuel cell.

## Patentansprüche

1. Verfahren zur Herstellung von Kathoden auf der Basis von Lithiumcobaltit für Brennstoffzellen mit geschmolzenem Carbonat, gekennzeichnet durch die Schritte:
- das film- bzw. bandförmige Gießen eines Gemisches, das pulverförmiges Cobalt und Lithiumcarbonat enthält;
- das Schneiden des Gemisches in für Kathoden geeignete Formen und Abmessungen; und
- das Erwärmen des Gemisches, um Kathoden auf der Basis von Lithiumcobaltit zu erhalten.

2. Verfahren nach Anspruch 1, wobei das Gemisch mindestens ein Bindemittel enthält.

3. Verfahren nach Anspruch 1, wobei das Gemisch mindestens ein Antischäumungsmittel enthält.

4. Verfahren nach Anspruch 1, wobei das Gemisch mindestens ein Lösungsmittel enthält.

5. Verfahren nach Anspruch 1, wobei das pulverförmige Cobalt in dem Gemisch aus Körnchen mit Abmessungen im Bereich von 0,001 mm bis 0,005 mm besteht.

6. Verfahren nach einem der Ansprüche 1 bis 5, wobei das Gemisch enthält:
| | | |
|---|---|---|
| Cobaltpulver | 100 | Gewichtsteile |
| Lithiumcarbonat | 70-100 | Gewichtsteile |
| Bindemittel | 20-40 | Gewichtsteile |
| Antischäumungsmittel | 2-8 | Gewichtsteile |
| Lösungsmittel | 400-1000 | Gewichtsteile |

7. Verfahren nach Anspruch 6, dadurch gekennzeichnet, daß das mindestens eine Bindemittel Methylcellulose ist.

8. Verfahren nach Anspruch 6, dadurch gekennzeichnet, daß das mindestens eine Antischäumungsmittel Simethicon ist.

9. Verfahren nach Anspruch 6, dadurch gekennzeichnet, daß das mindestens eine Lösungsmittel entionisiertes Wasser ist.

10. Verfahren nach Anspruch 1, wobei das Gemisch auf eine Temperatur im Bereich von 850°C bis 1050°C erwärmt wird.

11. Verfahren nach Anspruch 1, wobei das Gemisch direkt in die Brennstoffzelle eingebracht und in dem geschmolzenen Carbonat erwärmt wird.

## Revendications

1. Procédé de fabrication de cathodes à base de cobaltite de lithium pour piles à combustible à carbonate fondu, comprenant le fait d'être caractérisé par les étapes consistant à :
* couler en ruban un mélange contenant du cobalt en poudre et du carbonate de lithium;
* découper ledit mélange en formes et dimensions appropriées pour des cathodes; et
* chauffer ledit mélange pour provoquer la formation desdites cathodes à base de cobaltite de lithium.

2. Procédé selon la revendication 1, dans lequel le mélange contient au moins un agent liant.

3. Procédé selon la revendication 1, dans lequel le mélange contient au moins un agent anti-mousse.

4. Procédé selon la revendication 1, dans lequel le mélange contient au moins un solvant.

5. Procédé selon la revendication 1, dans lequel le cobalt en poudre dans le mélange est constitué par des granules de dimensions comprises entre 0,001 mm et 0,005 mm.

6. Procédé selon les revendications 1 à 5, dans lequel le mélange contient, en fractions en poids :
| | |
|---|---|
| poudre de cobalt | 100 parties |
| carbonate de lithium | 70 à 100 parties |
| agent liant | 20 à 40 parties |
| agent anti-mousse | 2 à 8 parties |
| solvant | 400 à 1000 parties |

7. Procédé selon la revendication 6, caractérisé en ce que ledit au moins un agent liant est la méthylcellulose.

8. Procédé selon la revendication 6, caractérisé en ce que ledit au moins un agent anti-mousse est la siméthicone.

9. Procédé selon la revendication 6, caractérisé en ce que ledit au moins un solvant est l'eau déminéralisée.

10. Procédé selon la revendication 1, dans lequel le mélange est chauffé à une température comprise entre 850°C et 1050°C.

11. Procédé selon la revendication 1, dans lequel le mélange est chauffé par assemblage de ce dernier directement dans une pile à combustible à carbonate fondu.
